# EUROPEAN PATENT SPECIFICATION

(11) **EP 2 950 042 B1**
(45) Date of publication and mention of the grant of the patent: **14.12.2016**
(21) Application number: 15001543.6
(22) Date of filing: 21.05.2015
(51) Int. Cl.: G01B 11/25

(54) **METHOD AND EQUIPMENT FOR MONITORING SUITABILITY OF A TUBULAR OBJECT GEOMETRY**
VERFAHREN UND VORRICHTUNG ZUR ÜBERWACHUNG DER EIGNUNG EINES GEGENSTANDS MIT ROHRFÖRMIGER GEOMETRIE
PROCÉDÉ ET ÉQUIPEMENT PERMETTANT DE SURVEILLER L'ADÉQUATION DE LA GÉOMÉTRIE D'UN OBJET TUBULAIRE

(30) Priority: 28.05.2014 SI 201400200
(43) Date of publication of application: 02.12.2015
(73) Proprietor: Alpineon d.o.o., 1000 Ljubljana (SI)
(72) Inventor: Zganec, Mario, 4204 Golnik (SI); Zganec Gros, Jerneja, 4204 Golnik (SI)
(74) Representative: Ros, Zlata

(56) References cited:
- US-A- 5 289 261
- US-A1- 2007 261 259
- US-A1- 2011 268 322

## Description

The invention relates to a method for monitoring suitability of a tubular object geometry by simultaneously photographing said tubular object by at least two imaging devices and extracting a three-dimensional model of said tubular object from obtained photographs as well as analysing deviations of said three-dimensional model of the tubular object from a reference three-dimensional model of the tubular object. The invention also relates to an equipment for carrying out said method.

Identification of defects of a shape of a fabricated product such as a tube by means of triangulation based software is known (US 2006/0140473 A1). As such, the following two are used: either a computer designed three-dimensional model of this fabricated product as a reference model of this product or a three-dimensional model obtained by triangulation based on photographs of this product in several views as a model of the actual fabricated product. In fact, the US 2006/0140473 A1 does nether disclose how a user is supposed to simply and quickly position the complex-shaped fabricated product in terms of the arrangement of imaging devices and how he is to illuminate said fabricated product to obtain photographs nor whether the equipment allows the user to carry out mass monitoring of fabricated products of the same kind one after another in a controlled way and uninterruptedly only by a glance at displayed defect spots of the fabricated product as well.

A monitored tube, which is bent several times, e.g. a tube of an exhaust system or a braking system in a motor vehicle, is positioned on holders over a uniformly illuminated surface and simultaneously photographed by several imaging devices (DE 40 09 144 A1). Output signals from the imaging devices are transferred to a computer to determine a shape and dimensions of individual parts of the tube. Positioning of said holders before each individual monitoring of a series of a specific type of tubes is demanding. No fast presentation of deviation of the bent tube from the preset shape is disclosed.

US 5 289 261 discloses a device for measuring a 3D shape of an elongate member.

The technical problem of the invention is to propose such method for monitoring suitability of a tubular object geometry, which will guide a user in properly positioning said complex-shaped tubular object before photographing it and will make it possible to simply and most appropriately illuminate it and to rapidly assess the suitability of the tubular object geometry. The technical problem of the invention is also to propose an equipment for rapidly carrying out said method on a series of tubular objects of the same kind.

The technical problem is solved by the method for monitoring a suitability of geometry of a tubular object as characterized by the features of the characterizing portion of the first claim and the equipment for carrying out said method as characterized by the features of the characterizing portion of the seventh claim. The variants of the embodiments are characterized by dependent claims.

The method and the equipment of the invention for monitoring suitability of a tubular object geometry distinguish themselves by being adapted for a fast industrial application. A computer provides for displaying where and in which position the tubular object to be monitored must be positioned, whereby higher accuracy of the proposed method is guaranteed.

Identifying spots, on which the currently monitored tubular object critically deviates from the designed tubular object, as well as automatic calibration of the equipment without need to position a calibration pattern next to the monitored tubular object advantageously accelerate the monitoring procedure.

The equipment of the invention for monitoring the suitability of the tubular object geometry is simple since a display device is at the same time a user interface and functions as a large area light source, wherein said area is adjustable in order for the imaging devices to capture the sharpest possible photographs of the tubular object.

The invention will now be explained in more detail by way of the description of embodiments of the method and the equipment of the invention intended for monitoring suitability of geometry of a tubular object as well as by way of the accompanying drawing, in which:

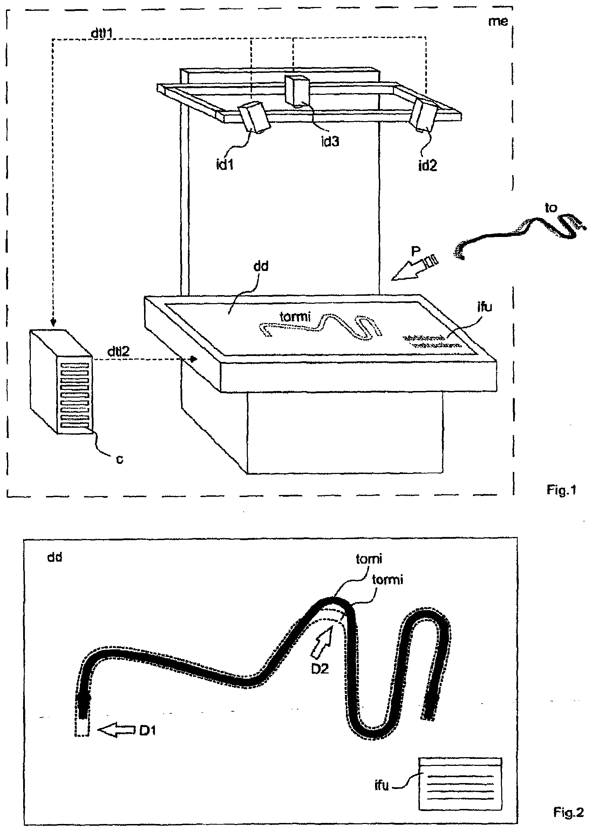

- Fig. 1: schematically shows the equipment of the invention for monitoring suitability of geometry of the tubular object comprising a display device used as a table, on which the tubular object is to be positioned, imaging devices and a computer, which is provided with a photogrammetry software and wherein a reference three-dimensional model of the monitored tubular object as well as instructions for use are stored, and
- Fig. 2: shows the display device displaying an image of the three-dimensional model of the tubular object as extracted from its pictures over an image of the reference three-dimensional model of said tubular object and two spots marked with arrows on the tubular object where the deviations of said models from each other exceed tolerance, as well as the instructions for use.

According to a method for monitoring suitability of geometry of a tubular object to, *i.e.* an object having a circular transverse profile, at least two imaging devices - three imaging devices id1, id2, id3 are represented in Figure 1 - in a known way simultaneously photograph the tubular object to. Output data from the imaging devices id1, id2, id3 are transferred to a computer c, which is provided with a photogrammetry software. By means of triangulation methods said software extracts from said output data a three-dimensional model of the tubular object to in a known way, suitability of which object is now monitored.

The computer c stores a reference three-dimensional model of the tubular object to, which is for instance a computer designed three-dimensional model for said tubular object of the kind just monitored. In a known way, the three-dimensional model of the tubular object to is analysed and deviations of this three-dimensional model of the actual tubular object to from the reference three-dimensional model of said tubular object to are identified.

According to the invention, however, a horizontally positioned display device dd, *e.g.* a liquid crystal display device, first displays an image tormi of the reference three-dimensional model of the tubular object to.

A user then positions the tubular object to - an arrow P - on the horizontally positioned display device dd over the displayed image tormi of the reference three-dimensional model of the tubular object to in the position, in which it is represented in the image tormi of the reference three-dimensional model of the tubular object to. This position of the tubular object to has been chosen to be displayed because it allows the imaging devices id1, id2, id3 to most accurately photograph the tubular object to.

The imaging devices id1, id2, id3 simultaneously photograph the tubular object to positioned in said way and now illuminated by the entire displaying area of the display device dd. Because the tubular object to is opaque the imaging devices id1, id2, id3 only sense a silhouette of the tubular object to illuminated from below.

The computer c compares the three-dimensional model of the tubular object to as extracted from said output data against the reference three-dimensional model of said tubular object to.

An equipment of the invention for monitoring the suitability of geometry of the tubular object to attracts user's attention, with an acoustic signal for example, whenever deviations of said models from each other exceed tolerance at the currently monitored tubular object to.

Said warning can also be displayed (Fig. 2). The display device dd displays the captured image tomi of the three-dimensional model of the actual tubular object to. Said image is displayed over the image tormi (dashed) of the reference three-dimensional model of said tubular object to. At the same time, arrows D1 and D2 on Fig. 2 are used to mark spots of this tubular object to, on which the deviations of both said models between each other exceed tolerance, *i.e.* the deviations of the monitored object to from the other one as designed by the computer.

Preferably, the imaging devices id1, id2, id3 then simultaneously photograph the tubular object to positioned over the image tormi of the reference three-dimensional model of said tubular object to when it is illuminated by only a strip of the display device dd, which is largely positioned under the tubular object to. Due to the illumination adjusted in said way the image of the tubular object to becomes more contrast-silhouette like because the flux of light reflected from its flank surfaces and entering the imaging devices id1, id2, id3 is reduced.

A calibration pattern is stored in the computer c. The display device dd displays it. This view is photographed in order to carry out an automatic calibration of the equipment.

The instructions ifu for use of the equipment for monitoring the suitability of geometry of the tubular object to are displayed on the display device dd as additional instructions or warnings to the user. Their options comprise a selection of a type of the tubular object to, which is to be monitored, a setting of tolerance and so forth. The user selects an option from the instructions ifu for use by positioning his finger over a position of said option as displayed on the display device dd. The imaging devices id1, id2, id3 photograph this gesture, whereon a more detailed instruction belonging to the selected option or a field for data entry are displayed on the display device dd. The display device dd and said area above it act as a user interface.

An equipment me for monitoring suitability of geometry of a tubular object to comprises in a known way a table for positioning said tubular object to thereon and a light source to illuminate it. Furthermore, in a known way the equipment comprises at least two imaging devices, which are positioned over the table and at the same time photograph both the tubular object to and a table surface from at least two views; advantageously at least three imaging devices id1, id2, id3 are used to get more surfaces of the tubular object to visible, which would be otherwise blocked by parts of the tubular object to itself.

The equipment me for monitoring the suitability of geometry of the tubular object to in a known way comprises a computer c too. Hereto imaging devices id1, id2, id3 are connected via a first data transferring link dtl1 for transferring their output data to the computer c and a high-resolution display device is connected via a second data transferring link dtl2 for transferring data from and to the computer c.

In a known way the computer c is provided with a photogrammetry software in order to extract a three-dimensional model of the tubular object to out of said output data from the imaging devices id1, id2, id3. In a known way a reference three-dimensional model of the tubular object to is stored in the computer c.

And finally, in a known way the computer c also analyses deviations of the three-dimensional model of the tubular object to from its reference three-dimensional model.

According to the invention, however, the horizontally positioned display device dd is used as a multipurpose device; it is used as said display device, said table for positioning the tubular object to and said light source for illuminating the tubular object to positioned thereon.

According to the invention the horizontally positioned display device dd displays an image tormi of the reference three-dimensional model of the tubular object to in a position, which enables the imaging devices id1, id2, id3 to most accurately photograph the tubular object to. Therefore the image tormi instructs the user how to position the tubular object to on the horizontally positioned display device dd. The equipment me for monitoring the suitability of geometry of the tubular object to is provided with means, which attracts user's attention, e.g. with an acoustic signal, whenever the deviations of the three-dimensional model of the tubular object to as extracted from said output data against the reference three-dimensional model of the tubular object to exceed tolerance at the currently monitored tubular object to.

User's attention to deficiencies may also be called by displaying the image tomi of the captured three-dimensional model of the tubular object to and therein marking spots - with arrows D1 and D2 (Fig. 2), for example - where said deviations have been ascertained.

The horizontally positioned display device dd advantageously makes it possible that only a selected strip of its display area is illuminated, which strip is situated below the monitored tubular object to.

The entire display area of the horizontally positioned display device dd is within visual range of at least two imaging devices id1, id2, ... positioned thereover so that they can capture areas foreseen for calibration and instructions ifu to the user as well.

The equipment me for monitoring the suitability of geometry of the tubular object to automatically calibrates itself by displaying calibration pattern on the display device dd and photographing this view by the imaging devices id1, id2, ...

The display device dd displays the instructions ifu for use. The user selects an option from the instructions ifu for use by positioning his finger over a position of said option as displayed on the display device dd that is captured by the imaging devices id1, id2 and id3.

## Claims

1. A method for monitoring suitability of geometry of a tubular object (to) by simultaneously photographing the tubular object (to) by at least two imaging devices (id1, id2, ...) and
transferring their output data into a computer (c),
which is provided with a photogrammetry software and
which extracts a three-dimensional model of the tubular object (to) from said output data, and
wherein a reference three-dimensional model of the tubular object (to) is stored and
which analyses deviations of said three-dimensional model of the tubular object (to) from said reference three-dimensional model of said tubular object (to), **characterized in**
**that** a horizontally positioned display device (dd) displays an image (tormi) of the reference three-dimensional model of the tubular object (to),
**that** a user positions the tubular object (to) on the horizontally positioned display device (dd) over the image (tormi) of the reference three-dimensional model of the tubular object (to) in the position, in which it is represented by the image (tormi) of the reference three-dimensional model,
**that** the imaging devices (id1, id2, ...) simultaneously photograph the tubular object (to) illuminated by said display device (dd)
and **that** the computer (c) checks the three-dimensional model of the tubular object (to) as extracted from said output data against the reference three-dimensional model of the tubular object (to) and
the user's attention is called whenever the deviations of said models from each other exceed tolerance at the currently monitored tubular object (to).

2. The method as recited in claim 1, **characterized in**
**that** the at least two imaging devices (id1, id2, ...) simultaneously photograph the tubular object (to) as positioned over the image (tormi) of the reference three-dimensional model of said tubular object (to) and illuminated by such strip of the horizontally positioned display device (dd), which is only positioned under the tubular object (to).

3. The method as recited in claim 1 or 2, **characterized in**
**that** the horizontally positioned display device (dd) displays the image (tormi) of the reference three-dimensional model of the tubular object (to) positioned in a position, which enables at least two imaging devices (id1, id2, ...) to most accurately photograph said tubular object (to).

4. The method as recited in claim 3, **characterized in**
**that** a calibration pattern stored within the computer (c) is displayed on the display device (dd), said display is photographed and an automatic calibration of the equipment is carried out.

5. The method as recited in claim 4, **characterized in**
**that** instructions (ifu) for use stored in the computer (c) are displayed on the display device (dd) and
the user selects an option from the instructions (ifu) for use by positioning his finger over a position of said option as displayed on the display device (dd).

6. The method as recited in claim 5, **characterized in**
**that** the display device (dd) displays the image (tomi) of the three-dimensional model of the tubular object (to) as extracted from said output data over the image (tormi) of the reference three-dimensional model of said tubular object (to) and
spots of the tubular object (to) are marked, where the deviations of said models from each other exceed tolerance.

7. An equipment (me) for monitoring suitability of geometry of a tubular object (to) comprising
a table for positioning said tubular object (to) thereon and a light source to illuminate the tubular object (to),
at least two imaging devices (id1, id2, ...) positioned over the table for
simultaneously photographing the tubular object (to) as well as a table surface and a computer (c), whereto
said at least two imaging devices (idl, id2, ...) are connected via a first data transferring link (dtl1) for transferring output data from said imaging devices (id1, id2, ...) to the computer (c) and
a display device is connected via a second data transferring link (dtl2) for transferring data from and to the computer (c) and
which is provided with a photogrammetry software
in order to extract a three-dimensional model of the tubular object (to) out of said output data from said imaging devices (id1, id2, ...) and
wherein a reference three-dimensional model of the tubular object (to) is stored and
which is adapted to analyse deviations of the three-dimensional model of the tubular object (to) as obtained through said output data from the reference three-dimensional model of said tubular object (to),
**characterized in**
**that** a horizontally positioned display device (dd) is at the same time applied as
said display device,
said table for positioning said tubular object (to) thereon as well as said light source to illuminate the tubular object (to),
**that** the horizontally positioned display device (dd) is adapted to display an image (tormi) of the reference three-dimensional model of the tubular object (to) in a position, for instructing a user how to position the tubular object (to) on the horizontally positioned display device (dd) in order to enable at least two imaging devices (id1, id2, ...) to most accurately photograph said tubular object (to),
and **that** it is provided with a means, for attracting user's attention whenever the deviations of said models from each other exceed tolerance at the currently monitored tubular object (to).

8. The equipment (me) as recited in claim 7, **characterized in that** the horizontally positioned display device (dd) is adjustable so that only a selected strip of its display area is illuminated.

9. The equipment (me) as recited in claim 8, **characterized in that** the entire display area of the horizontally positioned display device (dd) is within the visual range of at least two imaging devices (id1, id2, ...) positioned thereover.

10. The equipment (me) as recited in claim 9, **characterized in that** it calibrates itself automatically.

11. The equipment (me) as recited in claim 10, **characterized in that** it is provided with instructions (ifu) for use,
which are displayed on the display device (dd) and
from which the user selects an option by positioning his finger over a position of said option as displayed on the display device (dd).

12. The equipment (me) as recited in claim 11, **characterized in that** the user's attention is called to the fact that at the currently monitored tubular object (to) the deviations of said models from each other exceed tolerance by displaying the image (tomi) of the three-dimensional model of the tubular object (to) as obtained by said output data and marking spots therein where said deviations have been ascertained.

## Patentansprüche

1. Verfahren zur Überwachung der Eignung der Geometrie eines rohrförmigen Gegenstands (to) durch
gleichzeitiges Fotografieren des rohrförmigen Gegenstands (to) mit mindestens zwei optischen Sensoren (id1, id2, ...) und
Leiten ihrer Ausgabedaten in einen Rechner (c),
der mit einer Fotogrammetriesoftware versehen ist und
der ein dreidimensionales Model des rohrförmigen Gegenstands (to) aus den Ausgabedaten extrahiert und
in dem ein dreidimensionales Bezugsmodel des rohrförmigen Gegenstands (to) gespeichert ist und
der Abweichungen des dreidimensionalen Models des rohrförmigen Gegenstands (to) vom dreidimensionalen Bezugsmodel des rohrförmigen Gegenstands (to) analysiert, **dadurch gekennzeichnet,**
**dass** eine horizontal gelegene Wiedergabevorrichtung (dd) ein Bild (tormi) des dreidimensionalen Bezugsmodels des rohrförmigen Gegenstands (to) wiedergibt,
**dass** ein Bediener den rohrförmigen Gegenstand (to) an die horizontal gelegene Wiedergabevorrichtung (dd) über das Bild (tormi) des dreidimensionalen Bezugsmodels des rohrförmigen Gegenstands (to) in eine Lage anordnet, in der er durch das Bild (tormi) des dreidimensionalen Bezugsmodels dargestellt wird,
**dass** die optischen Sensoren (id1, id2, ...) den von der Wiedergabevorrichtung (dd) beleuchteten rohrförmigen Gegenstand (to) gleichzeitig fotografieren
und **dass** der Rechner (c) das aus den Ausgabedaten extrahierte dreidimensionale Model des rohrförmigen Gegenstands (to) mit dem dreidimensionalen Bezugsmodels des rohrförmigen Gegenstands (to) vergleicht und
der Bediener immer aufmerksam gemacht wird, wenn bei dem gerade überwachten rohrförmigen Gegenstand (to) die Abweichungen der Modele voneinander die Toleranz überschreiten.

2. Verfahren nach Anspruch 1, **dadurch gekennzeichnet,**
**dass** die mindestens zwei optischen Sensoren (id1, id2, ...) den
über das Bild (tormi) des dreidimensionalen Bezugsmodels des rohrförmigen Gegenstands (to) gelegten und
von einem nur unter dem rohrförmigen Gegenstand (to) gelegenen Streifen der horizontal gelegenen Wiedergabevorrichtung (dd) beleuchteten
rohrförmigen Gegenstand (to) gleichzeitig fotografieren.

3. Verfahren nach Anspruch 1 oder 2, **dadurch gekennzeichnet,**
**dass** die horizontal gelegene Wiedergabevorrichtung (dd) das Bild (tormi) des dreidimensionalen Bezugsmodels des in einer solchen Lage gelegenen rohrförmigen Gegenstands (to) wiedergibt, die den mindestens zwei optischen Sensoren (id1, id2, ...) ermöglicht, den rohrförmigen Gegenstand (to) möglichst genau zu fotografieren.

4. Verfahren nach Anspruch 3, **dadurch gekennzeichnet,**
**dass** ein im Rechner (c) gespeichertes Kalibriermuster auf der Wiedergabevorrichtung (dd) wiedergegeben, diese Wiedergabevorrichtung (dd) fotografiert und eine selbsttätige Kalibrierung der Vorrichtung durchgeführt wird.

5. Verfahren nach Anspruch 4, **dadurch gekennzeichnet,**
**dass** im Rechner (c) gespeicherte Gebrauchsanleitungen (ifu) auf der Wiedergabevorrichtung (dd) wiedergegeben werden und
der Bediener eine Möglichkeit von den Gebrauchsanleitungen (ifu) durch Legen seines Fingers über ihre Wiedergabestelle auf der Wiedergabevorrichtung (dd) wählt.

6. Verfahren nach Anspruch 5, **dadurch gekennzeichnet,**
**dass** die Wiedergabevorrichtung (dd) das Bild (tomi) des dreidimensionalen aus den Ausgabedaten extrahierten Models des rohrförmigen Gegenstands (to) über dem Bild (tormi) des dreidimensionalen Bezugsmodels des rohrförmigen Gegenstands (to) wiedergibt und
Stellen des rohrförmigen Gegenstands (to), an denen die Abweichungen der Modele voneinander die Toleranz überschreiten, markiert werden.

7. Vorrichtung zur Überwachung der Eignung der Geometrie eines rohrförmigen Gegenstands (to),
die einen Tisch zum Positionieren des rohrförmigen Gegenstands (to) daran und
eine Lichtquelle zum Beleuchten des rohrförmigen Gegenstands (to),
mindestens zwei über dem Tisch angeordnete optische Sensoren (id1, id2, ...) zum gleichzeitigen Fotografieren des rohrförmigen Gegenstands (to) zusammen mit einer Tischoberfläche und
einen Rechner (c),
an den die mindestens zwei optischen Sensoren (id1, id2, ...)
durch eine erste Datenübetragungsverbindung (dt1) zum Leiten der Ausgabedaten von den die mindestens zwei optischen Sensoren (id1, id2, ...) zum Rechner (c) und
eine Wiedergabevorrichtung
durch eine zweite Datenübetragungsverbindung (dtl2) zum Leiten von Daten vom und zum Rechner (c)
angeschlossen sind und
der mit einer Fotogrammetriesoftware zum Extrahieren
eines dreidimensionalen Models des rohrförmigen Gegenstands (to) aus den Ausgabedaten der optischen Sensoren (id1, id2, ...) versehen ist und
in dem ein dreidimensionales Bezugsmodel des rohrförmigen Gegenstands (to) gespeichert ist und
der zum Analysieren von Abweichungen des dreidimensionalen Models des rohrförmigen Gegenstands (to) vom dreidimensionalen Bezugsmodel des rohrförmigen Gegenstands (to) angepasst ist,
umfasst,
**dadurch gekennzeichnet,**
**dass** eine horizontal gelegene Wiedergabevorrichtung (dd) zugleich als die genannte Wiedergabevorrichtung,
der genannte Tisch zum Positionieren des rohrförmigen Gegenstands (to) daran und die genannte Lichtquelle zum Beleuchten des rohrförmigen Gegenstands (to) verwendet wird,
**dass** die horizontal gelegene Wiedergabevorrichtung (dd)
zum Wiedergeben eines Bilds (tormi) des dreidimensionalen Bezugsmodels des rohrförmigen Gegenstands (to) in solcher Lage angepasst ist,
die einen Bediener anleitet,
wie der rohrförmige Gegenstand (to) an die horizontal gelegene Wiedergabevorrichtung (dd) anzuordnen ist,
um den mindestens zwei optischen Sensoren (id1, id2, ...) zu ermöglichen,
den rohrförmigen Gegenstand (to) möglichst genau zu fotografieren,
und **dass** sie mit einem Mittel zum Aufmerksammachen des Bedieners, immer wenn bei dem gerade überwachten rohrförmigen Gegenstand (to) die Abweichungen der Modele voneinander die Toleranz überschreiten,
versehen ist.

8. Vorrichtung nach Anspruch 7, **dadurch gekennzeichnet,**
**dass** die horizontal gelegene Wiedergabevorrichtung (dd) so einstellbar ist, dass nur ein gewählter Streifen ihrer Wiedergabeoberfläche beleuchtet wird.

9. Vorrichtung nach Anspruch 8, **dadurch gekennzeichnet,**
**dass** die ganze Wiedergabeoberfläche der horizontal gelegenen Wiedergabevorrichtung (dd) innerhalb der Sichtweite der darüber angeordneten mindestens zwei optischen Sensoren (id1, id2, ...) liegt.

10. Vorrichtung nach Anspruch 9, **dadurch gekennzeichnet,**
**dass** sie sich selbsttätig kalibriert.

11. Vorrichtung nach Anspruch 10, **dadurch gekennzeichnet,**
**dass** sie mit Gebrauchsanleitungen (ifu) versehen ist,
die auf der Wiedergabevorrichtung (dd) wiedergegeben werden, und
von denen der Bediener eine Möglichkeit durch Legen seines Fingers über deren Wiedergabestelle auf der Wiedergabevorrichtung (dd) wählt.

12. Vorrichtung nach Anspruch 11, **dadurch gekennzeichnet,**
**dass** die Aufmerksamkeit des Bedieners daran geweckt wird,
**dass** bei dem gerade überwachten rohrförmigen Gegenstand (to) die Abweichungen der Modele voneinander die Toleranz überschreiten,
durch Wiedergeben des Bilds (tomi) des dreidimensionalen aus den Ausgabedaten extrahierten Models des rohrförmigen Gegenstands (to) und
Markieren der Stellen darauf, an denen die Abweichungen der Modele voneinander die Toleranz überschreiten.

## Revendications

1. Procédé destiné à surveiller l'adéquation de la géométrie d'un objet tubulaire (to)
en photographiant simultanément l'objet tubulaire (to) avec au moins deux dispositifs d'imagerie (id1, id2, ...) et
en transférant leurs données de sortie dans un ordinateur (c),
qui est pourvu d'un logiciel de photogrammétrie et qui extrait un modèle tridimensionnel de l'objet tubulaire (to) desdites données de sortie, et
dans lequel un modèle tridimensionnel de référence de l'objet tubulaire (to) est stocké et
qui analyse les écarts dudit modèle tridimensionnel de l'objet tubulaire (to) par rapport audit modèle tridimensionnel de référence dudit objet tubulaire (to)
**caractérisé**
**en ce qu'**un dispositif d'affichage positionné horizontalement (dd) affiche une image (tormi) du modèle tridimensionnel de référence de l'objet tubulaire (to),
**en ce qu'**un utilisateur positionne l'objet tubulaire (to) sur le dispositif d'affichage positionné horizontalement (dd) par-dessus l'image (tormi) du modèle tridimensionnel de référence de l'objet tubulaire (to) dans la position dans laquelle il est représenté par l'image (tormi) du modèle tridimensionnel de référence,
**en ce que** les dispositifs d'imagerie (id1, id2, ...) photographient simultanément l'objet tubulaire (to) éclairé par ledit dispositif d'affichage (dd)
et **en ce que** l'ordinateur (c) vérifie le modèle tridimensionnel de l'objet tubulaire (to) tel qu'il est extrait desdits données de sortie par rapport au modèle tridimensionnel de référence de l'objet tubulaire (to) et
l'attention de l'utilisateur est attirée chaque fois que les écarts entre lesdits modèles dépassent une tolérance au niveau de l'objet tubulaire (to) en cours de surveillance.

2. Procédé selon la revendication 1, **caractérisé**
**en ce que** les au moins deux dispositifs d'imagerie (id1, id2, ...) photographient simultanément l'objet tubulaire (to) tel qu'il est positionné par-dessus l'image (tormi) du modèle tridimensionnel de référence dudit objet tubulaire (to) et éclairé par la bande du dispositif d'affichage positionné horizontalement (dd) qui est uniquement positionnée sous l'objet tubulaire (to) .

3. Procédé selon la revendication 1 ou 2, **caractérisé**
**en ce que** le dispositif d'affichage positionné horizontalement (dd) affiche l'image (tormi) du modèle tridimensionnel de référence de l'objet tubulaire (to) positionné dans une position qui permet à au moins deux dispositifs d'imagerie (id1, id2, ...) de photographier le plus précisément ledit objet tubulaire (to).

4. Procédé selon la revendication 3, **caractérisé**
**en ce qu'**un motif d'étalonnage stocké dans l'ordinateur (c) est affiché sur le dispositif d'affichage (dd), ledit affichage est photographié et un étalonnage automatique de l'équipement est réalisé.

5. Procédé selon la revendication 4, **caractérisé**
**en ce que** des instructions d'utilisation (ifu) stockées dans l'ordinateur (c) sont affichées sur le dispositif d'affichage (dd) et
l'utilisateur sélectionne une option parmi les instructions d'utilisation (ifu) en positionnant son doigt sur une position de ladite option telle qu'elle est affichée sur le dispositif d'affichage (dd).

6. Procédé selon la revendication 5, **caractérisé**
**en ce que** le dispositif d'affichage (dd) affiche l'image (tomi) du modèle tridimensionnel de l'objet tubulaire (to) tel qu'il est extrait desdites données de sortie par-dessus l'image (tormi) du modèle tridimensionnel de référence dudit objet tubulaire (to) et les points de l'objet tubulaire (to) où les écarts entre lesdits modèles dépassent la tolérance sont repérés.

7. Équipement (me) destiné à surveiller l'adéquation de la géométrie d'un objet tubulaire (to) comprenant
une table pour y positionner ledit objet tubulaire (to) et une source de lumière pour éclairer l'objet tubulaire (to),
au moins deux dispositifs d'imagerie (id1, id2, ...) positionnés sur la table pour photographier simultanément l'objet tubulaire (to) ainsi qu'une surface de la table et
un ordinateur (c), auquel
lesdits au moins deux dispositifs d'imagerie (id1, id2, ...) sont connectés par une première liaison de transfert de données (dtl1) pour transférer des données de sortie desdits dispositifs d'imagerie (id1, id2, ...) à l'ordinateur (c) et
un dispositif d'affichage est connecté par une deuxième liaison de transfert de données (dtl2) pour transférer des données de et à l'ordinateur (c) et
qui est pourvu d'un logiciel de photogrammétrie afin d'extraire un modèle tridimensionnel de l'objet tubulaire (to) desdites données de sortie desdits dispositifs d'imagerie (id1, id2, ...) et
dans lequel un modèle tridimensionnel de référence de l'objet tubulaire (to) est stocké et
qui est adapté pour analyser les écarts du modèle tridimensionnel de l'objet tubulaire (to) tel qu'il est obtenu à partir desdites données de sortie par rapport au modèle tridimensionnel de référence dudit objet tubulaire (to),
**caractérisé**
**en ce qu'**un dispositif d'affichage positionné horizontalement (dd) est en même temps utilisé en tant que
ledit dispositif d'affichage,
ladite table pour y positionner ledit objet tubulaire (to) ainsi que
ladite source de lumière pour éclairer l'objet tubulaire (to),
**en ce que** le dispositif d'affichage positionné horizontalement (dd) est adapté pour afficher une image (tormi) du modèle tridimensionnel de référence de l'objet tubulaire (to) dans une position,
pour expliquer à un utilisateur comment positionner l'objet tubulaire (to) sur le dispositif d'affichage positionné horizontalement (dd)
afin de permettre à au moins deux dispositifs d'imagerie (id1, id2, ...) de photographier le plus précisément ledit objet tubulaire (to),
et **en ce qu'**il est pourvu d'un moyen pour attirer l'attention de l'utilisateur chaque fois que les écarts entre lesdits modèles dépassent une tolérance au niveau de l'objet tubulaire (to) en cours de surveillance.

8. Équipement (me) selon la revendication 7, **caractérisé**
**en ce que** le dispositif d'affichage positionné horizontalement (dd) est ajustable de telle sorte que seule une bande sélectionnée de sa surface d'affichage est éclairée.

9. Équipement (me) selon la revendication 8, **caractérisé**
**en ce que** la surface d'affichage entière du dispositif d'affichage positionné horizontalement (dd) se situe dans la portée visuelle d'au moins deux dispositifs d'imagerie (id1, id2, ...) positionnés par-dessus.

10. Équipement (me) selon la revendication 9, **caractérisé**
**en ce qu'**il s'étalonne automatiquement.

11. Équipement (me) selon la revendication 10, **caractérisé**
**en ce qu'**il est pourvu d'instructions d'utilisation (ifu),
qui sont affichées sur le dispositif d'affichage (dd) et
parmi lesquelles l'utilisateur sélectionne une option en positionnant son doigt sur une position de ladite option telle qu'elle est affichée sur le dispositif d'affichage (dd).

12. Équipement (me) selon la revendication 11, **caractérisé**
**en ce que** l'attention de l'utilisateur est attirée sur le fait qu'au niveau de l'objet tubulaire (to) en cours de surveillance les écarts entre lesdits modèles dépassent la tolérance en affichant l'image (tomi) du modèle tridimensionnel de l'objet tubulaire (to) tel qu'il est obtenu à partir desdites données de sortie et en y repérant les points où lesdits écarts ont été vérifiés.
